# DEMANDE DE BREVET EUROPEEN

(11) **EP 3 933 610 A1**
(43) Date de publication de la demande: **05.01.2022**
(21) Numéro de dépôt: 21183578.0
(22) Date de dépôt: 02.07.2021
(51) Int. Cl.: G06F 16/245, G06Q 50/18, G06Q 10/10

(54) **PROCEDE DE RECHERCHE ASSISTEE DANS UNE BASE DE DONNEES ET SYSTEME DE RECHERCHE ASSOCIE**

(30) Priorité: 02.07.2020 FR 2007036
(71) Demandeur: Lencify, 75002 Paris (FR)
(72) Inventeur: TOPSU, Suat, 78000 Versailles (FR); POYET, Benoît, 78510Triel sur Seine (FR)
(74) Mandataire: A.P.I. Conseil

(57) **Abrégé**

La présente invention concerne un procédé de recherche assistée dans une première base de données BD1 (13) exécuté par un moteur de recherche (MR) configuré pour générer des résultats en réponse à une donnée d'interrogation (DON) comprenant les étapes de calcul d'un premier indice de similarité entre au moins un premier enregistrement ENR1 (17) d'une deuxième bases de données BD2 (16) et des enregistrements ENRBD1 (14) de la première base de données BD1 (13) et de recherche d'au moins un premier résultat (RES1). Selon l'invention, le procédé comporte en outre le calcul d'un deuxième indice de similarité (SIM2) entre au moins un deuxième enregistrement ENR2 (19) d'une troisième base de données BD3 (18) et des enregistrements ENRBD1 (14) de la première base de données BD1 (13), la recherche d'au moins un deuxième résultat (RES2) comprenant des enregistrements ENRBD1 (14) de la première base de données BD1 (13) élaboré en fonction du deuxième indice de similarité, et la génération d'un résultat (15) comprenant lesdits résultats (RES1, RES2).

## Description

Le domaine de l'invention concerne un procédé de recherche assistée dans une base de données exécuté par un moteur de recherche, un système de recherche assisté et un programme associé.

Dans le domaine de la recherche scientifique de nombreuses entreprises et laboratoires enregistrent des documents numériques susceptibles d'intéresser d'autres acteurs de la société, par exemple des publications scientifiques ou des titres de droits de propriété intellectuelle, marques, brevets, dessins et modèles en l'occurrence. Ces dernières années, on a vu émerger de nombreuses plateformes reposant sur l'intégration d'un moteur de recherche de données dont l'objectif est de retourner une information pertinente, par exemple les moteurs de recherche de brevet en ligne d'accès public non payant, tel Espacenet, Googlepatent^{™}, ou les plateformes de marché en ligne destinées à mettre en relation certains acteurs économiques autour d'offres économiques se basant sur ces publications et titres de droits de propriété intellectuelle.

Classiquement, ces plateformes de marché en ligne utilisent un système de moteur de recherche dont l'objectif est de générer une liste de résultats pertinents à un utilisateur en recherche d'une information. Comme on le sait, l'attrait et le succès de telles plateformes reposent en grande partie sur leur capacité à garantir des résultats d'intérêts parmi nombre de documents et informations disponibles, susceptibles de se compter à plusieurs centaines de millions de documents. Le moteur de recherche doit donc être particulièrement bien conçu afin de délivrer un résultat pertinent à l'utilisateur.

Depuis maintenant de nombreuses années, les moteurs de recherche sont utilisés dans presque tous les domaines et ont été l'objet de développements technologiques pour les améliorer continuellement. Au commencement d'internet, ils ont eu un rôle crucial dans la recherche Web, et petit à petit tous les acteurs économiques interconnectés ont eu recours à des innovations technologiques reposant sur un moteur de recherche. Dans le domaine de l'offre de voyages aériens, les moteurs de recherche ont par exemple évolué en structure de type Métamoteur afin d'augmenter l'offre de résultats à un utilisateur en puisant leurs informations à travers plusieurs moteurs de recherche accessibles. On peut citer par exemple la demande de brevet français FR3062942A1 publiée en 2018 décrivant un métamoteur de recherche améliorée. D'autres innovations technologiques visent à améliorer non pas le volume d'information accessible, mais plutôt la qualité des résultats. A cet effet, on peut citer les filtres de résultats, ou bien les fonctions d'auto-apprentissage.

Dans le domaine du marché en ligne de publications scientifiques ou titres de propriété intellectuelle, le moteur de recherche doit délivrer à un utilisateur les résultats pertinents parmi la grande quantité d'information. Cependant dans ce domaine, l'information de fort potentiel économique pour un utilisateur n'est pas aisément identifiable car elle ne repose pas sur des paramètres aisément caractérisables en termes de données d'interrogation pour la requête de la recherche, à la différence d'une recherche d'un billet d'avion ou d'un bien de consommation dont les critères de recherche sont limités à un besoin bien précis. En effet, les structures des bases de données de brevet sont complexes et l'analyse de titres de brevet, notamment, requièrent une interprétation à la fois sémantique et juridique pour distinguer les résultats pertinents parmi le volume d'information.

Un autre problème peut être que la provision d'information peut être limitée par le souhait d'anonymat d'un utilisateur par rapport autres. Les transactions bien souvent ne se concrétisent pas faute d'une plateforme de transaction garantissant des sécurités d'usage. On connait le document brevet japonais JP2011203969A qui décrit un système dont l'objectif est de permettre des échanges entre les utilisateurs tout en garantissant l'anonymat entre deux.

Un autre problème peut être lié à la génération des documents contractuels encadrant les relations à établir. On connait le document JP2001306852A décrivant un système de négociation de licences de brevet sur une plateforme de marché en ligne. Ce système permet la génération automatique de documents contractuels.

On connait des stratégies de recherche améliorées faisant appel à des fonctions de similarité d'informations pour générer des résultats supplémentaires. Dans le domaine des bases de données d'information brevet, les fonctions de similarité reposent généralement sur des fonctions de traitement sémantique et de traitement de texte. On peut citer par exemple le moteur de recherche GooglePatent^{™} qui propose des résultats similaires aux résultats d'une recherche au moyen de fonctions d'analyse textuelle du contenu des documents. On connait également le document brevet US2018/0096254A1 publié en 2018 décrivant un système et une méthode d'analyse de risque de contrefaçon sur la base de fonctions d'analyse de similarité utilisant des extracteurs de texte et des algorithmes de « Clustering » notamment, désigné par le terme « Clustering Scheme » en anglais.

Un autre problème résulte bien souvent de la difficulté d'identification des critères de recherche pour adresser les documents pertinents. En particulier, dans le domaine des brevets, les structures de classification des bases de données sont complexes et requièrent des connaissances préalables pour leur usage, en particulier sur le plan de la compréhension technique et juridique. Les recherches effectuées sur la base de mots-clés n'aboutissent que rarement à un résultat pertinent car elles fournissent une liste volumineuse de résultats et sur des domaines éloignés, ou bien au contraire des listes restreintes du fait d'un mauvais choix de mots-clefs. On comprend donc que cette tâche est particulièrement difficile pour un utilisateur.

On connait par exemple le document brevet EP3261052A1 décrivant un système de traitement d'information pour la mise en œuvre d'une plateforme de marché en ligne de titres de propriété intellectuelle. Ce système décrit l'usage de fonctions d'extraction de contenus d'un document enregistré, textuels notamment, afin de cibler automatiquement un utilisateur de la plateforme (identifié par la désignation « business operator ») pour qui ce document serait susceptible d'être d'intéressant. En outre, l'utilisateur ciblé est identifié au moyen de fonctions d'estimation d'une similarité entre les données extraites du document et des mots clefs, pictogramme et/ou photographies préenregistrés par l'utilisateur concernant son profil technologique et produits commerciaux par exemple. Le système propose en outre des fonctions de coordination des communications permettant d'accompagner les échanges entre les utilisateurs tout au long du processus de transaction.

Le système de recherche tel que décrit dans le document EP3261052A1 présente des inconvénients. En particulier, dans le cas des bases de données brevet, lorsqu'une recherche se base sur des mots-clefs enregistrés par l'utilisateur, et même si une fonction de calcul de similarité entre un document et ces mots clefs permet d'améliorer l'interconnexion entre un utilisateur et un document, on a observé que généralement les résultats proposés sont soit trop volumineux, soit trop limités, soit mal ciblés.

On a donc identifié plusieurs améliorations nécessaires aux moteurs de recherche pour pallier les problèmes précités et perfectionner la recherche et la génération des résultats proposés à un utilisateur.

En particulier, à la première utilisation, il est primordial de toujours proposer à l'utilisateur un nombre minimum de résultats pertinents afin de lui démontrer tout d'abord un fonctionnement efficace du moteur de recherche. Un objectif de l'invention est donc de garantir à un utilisateur du moteur de recherche la génération d'un résultat dès la première utilisation. De plus, à l'usage il est nécessaire de maintenir un minimum de qualité dans les résultats proposés au risque sinon que celui-ci cesse d'utiliser la plateforme. Un autre objectif de l'invention est donc l'amélioration des fonctions de similarité afin de générer des résultats de qualité à un utilisateur. Un autre objectif de l'invention est de faciliter la phase de saisie de données d'interrogation et de recherche d'un utilisateur dans le moteur de recherche afin d'améliorer l'ergonomie d'usage de la plateforme de recherche. En particulier, le moteur de recherche a pour objectif de s'adresser aux utilisateurs n'ayant pas obligatoirement des compétences avancées dans le domaine, notamment techniques et juridiques dans le cas des bases de données d'articles scientifiques et de brevet, ainsi que des compétences avancées dans l'élaboration de requêtes de recherche pour des bases de données complexes.

Plus précisément, l'invention concerne un procédé de recherche assistée dans une première base de données BD1 exécuté par un moteur de recherche, par exemple mis en œuvre par un microprocesseur électronique et d'un programme informatique enregistré en mémoire du microprocesseur électronique, configuré pour générer des résultats en réponse à une donnée d'interrogation comprenant les étapes successives suivantes :
- La recherche d'au moins un premier enregistrement ENR1 dans une deuxième base de données BD2 à partir d'une première requête élaborée à partir de ladite donnée d'interrogation,
- Le calcul d'un premier indice de similarité entre ledit au moins premier enregistrement ENR1 et des enregistrements ENRBD de la première base de données BD1,
- La recherche d'au moins un premier résultat comprenant des enregistrements ENRBD1 de la première base de données BD1 élaboré en fonction du premier indice de similarité (SIM1).

Selon l'invention, le procédé comporte en outre les étapes successives suivantes :
- La recherche d'un moins un deuxième enregistrement ENR2 dans une troisième base de données BD3 à partir d'une deuxième requête élaborée à partir de ladite donnée d'interrogation,
- Le calcul d'un deuxième indice de similarité entre ledit au moins deuxième enregistrement ENR2 et des enregistrements ENRBD1 de la première base de données BD1,
- La recherche d'au moins un deuxième résultat comprenant des enregistrements ENRBD1 de la première base de données BD1 élaboré en fonction du deuxième indice de similarité,
- La génération d'un résultat comprenant lesdits au moins premier et/ou deuxième résultats.

Selon une variante, chaque étape de recherche du premier et/ou deuxième résultat consiste à rechercher les enregistrements ENRBD1 de la première base de données BD1 dont le premier indice de similarité et/ou le deuxième indice de similarité sont supérieurs à un seuil.

Selon une variante, le calcul du premier et/ou deuxième indice de similarité consiste à déterminer un premier code de classification commun entre chaque enregistrement ENRBD1 de la première base de données ENRBD1 et chaque premier et/ou deuxième enregistrement puis à calculer un indice de similarité dépendant dudit premier code de classification commun.

Selon une variante, le calcul du premier et/ou deuxième indice de similarité consiste à :
- Déterminer au moins une part d'un deuxième code de classification de chaque premier enregistrement ENR1 et/ou de chaque deuxième enregistrement ENR2,
- Sélectionner les enregistrements de la première base de données BD1 contenant ledit deuxième code,
- Calculer l'indice de similarité en fonction du produit d'un premier coefficient d'apparition dudit deuxième code associé à chaque premier enregistrement ENR1 et/ou à chaque deuxième enregistrement ENR2, et d'un deuxième coefficient d'apparition dudit code associé à chaque enregistrement de la première base de données BD1.

Selon une variante, le premier coefficient de chaque deuxième enregistrement ENR2 est déterminé à partir d'un premier index d'association prenant en entrée un deuxième enregistrement ENR2 de la troisième base de données BD3 et délivrant en sortie un coefficient prédéterminé associé au deuxième code de classification.

Selon une variante, pour exécuter le calcul du deuxième indice de similarité, le procédé comporte en outre une phase d'apprentissage comprenant les étapes suivantes :
- L'obtention des données d'une quatrième base de données comprenant la donnée d'interrogation associé à un numéro d'identification individuel et un troisième code de classification,
- L'obtention des données d'une cinquième base de données associant le numéro d'identification individuel et le deuxième enregistrement ENR2,
- La génération d'un deuxième index d'association à partir desdites données de la quatrième et cinquième base de données permettant l'apprentissage d'une correspondance entre le deuxième enregistrement ENR2 et le troisième code de classification.

Selon une variante, la donnée d'interrogation est une donnée d'identification de l'utilisateur, et les deuxièmes enregistrements ENR2 de la troisième base de données BD3 contiennent des données de classification de l'activité économique de l'utilisateur.

Selon une variante, le calcul du premier et/ou deuxième indice de similarité comporte les étapes suivantes :
- L'extraction d'un premier contenu textuel et/ou des mots-clefs issu de chaque premier et/ou deuxième enregistrement ENR1, ENR2,
- L'extraction d'un deuxième contenu textuel issu de chaque enregistrement ENRBD1 de la première base de données BD1,
- Calculer le premier et/ou le deuxième indice de similarité entre le premier et le deuxième contenu textuel.

Selon une variante, la deuxième base de données BD2 et la troisième base de données BD3 sont des bases de données distinctes accessibles par le réseau Web, chaque base de données étant accessible par une adresse http distincte, par exemple une adresse ip distincte, un nom de domaine distinct ou un serveur distinct.

Selon une variante, la deuxième base de données BD2 comporte au moins 50% des champs d'information qui sont identiques aux champs d'information des enregistrements formant la première base de données BD1.

Par exemple, des champs d'information de deux bases de données distinctes sont identiques au sens que la donnée enregistrée dans un champs d'information pour un enregistrement de la première base de données est identique à la donnée enregistrée dans un champs d'information pour un autre enregistrement de la deuxième base de données, au moins 50%, ou 60%, ou 70%, ou 80%, ou 90%, ou 100% des champs sont identiques entre les deux bases de données.

Selon une variante, la deuxième base de données BD2 comporte au moins 100 fois ou 1000 fois plus d'enregistrements que la première base de données BD1.

Selon une variante, la troisième base de données BD3 comporte moins de 10% des champs d'information des enregistrements formant la première base de données BD3.

Selon une variante, le premier résultat ne contient aucun enregistrement ENRBD1 de la première base de données BD1.

En variante, la probabilité de trouver un deuxième enregistrement dans la troisième base de données BD3 à partir de la donnée d'interrogation est supérieure à la probabilité de trouver un premier enregistrement dans la deuxième base de données BD2 à partir de ladite donnée d'interrogation.

Il est prévu également un système de recherche assistée d'enregistrements numériques comprenant une ou plusieurs mémoires électroniques, un ou plusieurs processeurs électroniques, une ou plusieurs interfaces et moyens de communication électronique distante, des première, deuxième et troisième bases de données BD1, BD2, BD3, des moyens de génération de requêtes de recherche dans lesdites bases de données BD1, BD2, BD3, un moyen de calcul d'un indice de similarité, des moyens de recherche d'enregistrements dans la première base de données BD1 en fonction d'un indice de similarité, et un moteur de recherche configuré spécifiquement pour exécuter le procédé de recherche assistée selon l'un quelconque des modes de réalisation précédents.

L'invention concerne également un produit programme d'ordinateur comprenant des instructions qui, lorsque le programme est exécuté par le système de recherche, conduisent celui-ci à mettre en œuvre le procédé de recherche assistée selon l'un quelconque des modes de réalisation précédents.

Selon une variante du procédé, les étapes pour la recherche du deuxième résultat sont exécutées seulement si l'étape de recherche du premier résultat ne répond aucun enregistrement.

Selon une variante du procédé, la deuxième et la troisième base de données ont des adresses http distinctes.

Selon une variante du procédé, les requêtes de recherche dans la première et/ou la deuxième base de données comprennent la donnée d'interrogation, ou comprennent des données issues d'un traitement intermédiaire prenant en entrée la donnée d'interrogation.

Selon une variante du procédé, la recherche du premier et/ou deuxième résultat consiste à sélectionner les enregistrements de la première base de données ayant un indice de similarité supérieur à un seuil, ou à sélectionner les enregistrements de la première base de données par valeur d'indice de similarité décroissant.

Selon une variante du procédé, le code de classification est absent des champs d'information de chaque deuxième enregistrement de la troisième base de données.

Selon une variante du procédé, la donnée d'interrogation est une donnée d'identification de l'utilisateur, et les deuxièmes enregistrements de la troisième base de données, la troisième base de données étant une base de données d'activité économique d'entreprise, contiennent des données de classification représentative de l'activité économique de l'utilisateur, tel qu'un code APE par exemple.

Selon une variante, le premier coefficient de chaque premier enregistrement est égal à un coefficient d'apparition dudit code de classification parmi les codes de classification attribués, où le code de classification est un code CIB et/ CPC.

Selon une variante, le deuxième coefficient de chaque enregistrement de la première base de données est le coefficient d'apparition dudit code de classification parmi les codes de classification attribués, où le code de classification est un code CIB et/ CPC.

Grâce à l'invention, on améliore la pertinence des résultats obtenus par mesure de similarité avec des enregistrements obtenus d'une base de données distante dont les résultats sont spécifiquement associés au profil de l'utilisateur. De plus, la recherche intermédiaire dans la seconde base de données distante dont la fonction est d'élargir la couverture de recherche garantit à l'utilisateur l'obtention d'une réponse à sa recherche. Cela démontre à l'utilisateur une efficacité et fiabilité du moteur de recherche.

D'autres caractéristiques et avantages de la présente invention apparaitront plus clairement à la lecture de la description détaillée qui suit comprenant des modes de réalisation de l'invention donnés à titre d'exemples nullement limitatifs et illustrés par les dessins annexés, dans lesquels :
La figure 1 représente un bloc diagramme fonctionnel d'un mode de réalisation du système de recherche assistée selon l'invention ;
La figure 2 représente un graphique d'un mode de réalisation d'une séquence d'usage du procédé de recherche assistée selon l'invention.

### DESCRIPTION DETAILLEE DE L'INVENTION

### Définitions

On prend tout d'abord le soin d'apporter quelques définitions de terminologie utilisée dans la description ci-après.

Le terme « application logicielle » désigne une entité logicielle, telle une base de données, un moteur de recherche, un site Web, une plateforme de marché en ligne utilisant le système de recherche qui est accessible via une interface logicielle au travers d'un réseau électronique de communication et d'échange d'information. Chaque application logicielle est mise en œuvre par une unité de traitement électronique comprenant une ou plusieurs mémoires électroniques, un ou plusieurs processeurs électroniques, une ou plusieurs interfaces et moyens de communication électronique. Une unité de traitement peut être un serveur, un ordinateur ou tout type de dispositif électronique prévu pour mettre en œuvre l'application logicielle.

Le terme « réseau électronique de communication » peut être un réseau interconnectant des dispositifs électroniques via des moyens de communications électroniques filaires (par exemple Ethernet, ADSL, VDSL) ou sans fil (Réseau de téléphonie mobile, réseau WIFI, Bluetooth ou bien encore un réseau satellite par exemple). De préférence, le réseau électronique de communication est le réseau internet (Web). Le réseau électronique de communication peut être un réseau privé accessible uniquement par des dispositifs électroniques à accès contrôlé.

Le terme « terminal d'utilisateur électronique » désigne un ordinateur, un téléphone mobile, une tablette électronique, une console électronique ou bien encore une montre connectée, ou bien encore un dispositif électronique muni d'une interface homme-machine.

Le terme « base de données » désigne une structure d'enregistrement d'informations remplissant la fonction d'archivage et de classification d'une multitude d'enregistrements numériques. La base de données est structurée par des champs d'information classant les attributs de classification des enregistrements.

Le terme « moteur de recherche » désigne un type de base de données structurée comprenant un index de liens pointant vers des sites Web. Cet index est construit par scrutation régulière des sites Web.

Le terme « plateforme de marché en ligne » désigne un service global logiciel et matériel permettant d'opérer le service en ligne de marché. Une plateforme est hébergée sur un serveur Web connecté au réseau Web.

Le terme « serveur » désigne un dispositif informatique (logiciel et matériel) qui offre des services à un ou plusieurs clients, tels que l'accès à l'information d'un réseau Web, une plateforme de services en ligne, le stockage en base de données, des services d'authentification et de contrôle d'accès, ou bien encore des applications logicielles.

Le terme « http » pour HyperText Transfert Protocol en anglais désigne le protocole de communication client-serveur pour le réseau Web.

### Architecture du système de recherche assistée

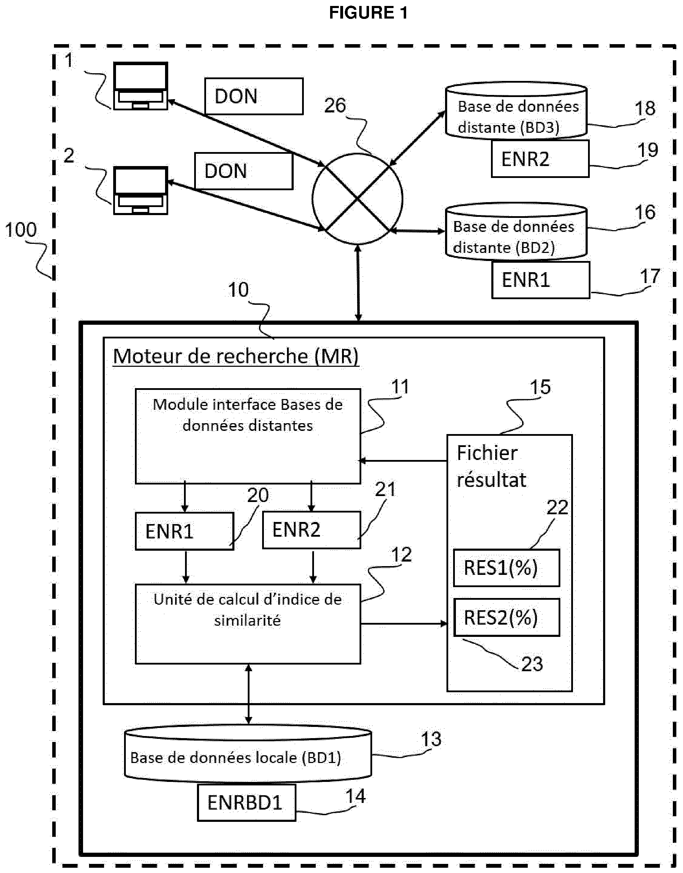

La figure 1 est un bloc diagramme fonctionnel du système de recherche assistée 100 selon l'invention s'appliquant de manière générale à un système comprenant un moteur de recherche dont la fonction est de délivrer un résultat à un utilisateur en réponse à une requête d'interrogation. De manière générale, un résultat peut se matérialiser sous la forme de documents numériques ou données numériques constituant des enregistrements numériques ENRBD1 14 dans une base de données BD1 13.

A titre d'exemple non limitatif, le système de recherche 100 s'applique pour une base de brevets d'accès public ou payant dont l'objectif est de délivrer une liste de brevet à un utilisateur. Dans un autre exemple, le système s'applique pour une plateforme de marché en ligne (couramment désignée par le terme « Marketplace » en anglais) proposant des offres contractuelles commerciales dans le domaine de la propriété intellectuelle. En particulier, ces offres commerciales reposent sur des documents de nature juridique ou scientifique pouvant se matérialiser sous la forme des documents numériques ou données numériques. La plateforme de marché peut être opérée par un ou plusieurs titulaires de droits ou par un opérateur intermédiaire dont la mission est d'opérer le service en ligne.

Dans un exemple de cas d'usage, un utilisateur ou plusieurs utilisateurs 1, 2 commence(nt) par s'inscrire à la plateforme. Lors du processus de la première connexion, chaque utilisateur 1, 2 enregistre son identité, incluant en l'occurrence un nom d'entreprise, nom de personne morale ou nom de personne physique, et des données descriptives de son activité économique, par exemple des mots-clefs descriptifs de produits et/ou services commercialisés par l'utilisateur, éventuellement, images et photographies, ou bien encore des données concernant des titres de propriété intellectuelle, par exemple numéro de dépôt, publications, ou numéro de brevet. Ces données ne sont pas limitatives. Cependant le processus d'inscription se veut être le plus facile d'usage pour un utilisateur et de préférence donc, la phase d'inscription requière uniquement l'enregistrement d'un nom et éventuellement quelques mots clefs descriptifs d'activité. Suivant la phase d'inscription, le moteur de recherche procède à une phase de recherche assistée d'enregistrements ENRBD1 14 dans la base de données BD1 13 qui sont susceptibles de correspondre avec le profil de l'utilisateur. L'invention concerne plus précisément ce processus de recherche assistée permettant d'améliorer significativement la pertinence et qualité des résultats tout en garantissant l'affichage d'un résultat à l'utilisateur. Le procédé et système associé seront décrits plus précisément dans la suite de la description.

Dans un exemple de cas d'utilisation, le système de recherche 100 délivre une liste de brevet dont les données sont d'accès gratuit. Dans un autre exemple, le système de recherche délivre des informations concernant des licences de brevet, de titres de brevet, de modèles d'utilité, de titres de marques, de titres de dessin et de modèles qui sont associés à des enregistrements ENRBD1 14 de la base de données BD1 13. Dans un autre exemple, la plateforme de marché propose en vente des articles et publications scientifiques. Dans un autre exemple, la plateforme de marché propose des produits, services et savoir-faire dans des domaines techniques spécialisés. Il s'agit d'exemples non exhaustifs de services proposés par la plateforme de marché exploitant le système de recherche assistée selon l'invention.

Par ailleurs, dans un exemple, suite à un résultat délivré par le système de recherche, un utilisateur peut être amené à une confirmation contractuelle de services qui est actée par la signature mutuelle d'un contrat qui est, de préférence généré soit automatiquement, soit par la sélection de clauses contractuelles prédéterminées par un utilisateur, au moyen d'un module de génération de contrat de la plateforme de marché en ligne. Ce module de génération automatique ne sera pas décrit en détail car il est indépendant du système de recherche 100.

Dans un mode de réalisation de la figure 1, le système de recherche assistée 100 comporte un moteur de recherche MR 10 hébergé par un serveur, une première base de données BD1 13, une deuxième base de donnée distante BD2 16, une troisième base de données distante BD3 18 et un réseau électronique de communication 26 permettant de connecter les utilisateurs 1 et 2 et les bases de données distantes BD2 16 et BD3 18 au système de recherche 100. Plus précisément, chaque utilisateur 1 et 2 est connecté au système de recherche 100 au moyen d'un terminal d'utilisateur électronique. Chaque unité du système de recherche 100 est opérée par une application logicielle pour mettre en œuvre les fonctions spécifiques à chaque unité, le moteur de recherche MR 10, les bases de données BD1 13, BD2 16 et BD3 18, et les interfaces de communication notamment.

Chaque utilisateur 1 et 2 a la possibilité de renseigner des données de profil d'utilisateur, et de requête de recherche s'il le souhaite, par l'intermédiaire du terminal d'utilisateur lors de son inscription à la plateforme de marché en ligne. Par données de profil d'utilisateur on peut citer le nom de l'entreprise, un domaine technique et commercial d'activité, des mots-clefs caractérisant l'activité et les produits et/ou service proposés par l'utilisateur. Ces données pré-enregistrées par l'utilisateur seront utilisées par le système de recherche 100 pour élaborer des requêtes de recherche. Le terme « donnée d'interrogation » désignera ces données pré-enregistrées par l'utilisateur.

### La base de données locale

Les titulaires de droits des enregistrements ENRBD1 14 qui sont enregistrés dans la base de données BD1 13 ne sont pas représentés sur la figure 1. On prend l'hypothèse que des titulaires de droits, par l'intermédiaire de l'opérateur de service, enregistrent des titres dans la base de données BD1 13, matérialisés par les enregistrement ENRBD1 14. La base de données BD1 13 est hébergée localement dans le système de recherche 100 sur un serveur, c'est-à-dire qu'elle est accessible uniquement par le moteur de recherche MR 10. La base de données BD1 13 est adressée à la même adresse http Web que le moteur de recherche MR 10.

### Les bases de données distantes

Les bases de données distantes BD2 16 et BD3 18 ont un rôle de recherche intermédiaire avant de générer un résultat délivré aux utilisateurs 1 et 2. Leur fonction est de fournir des enregistrements intermédiaires ENR1 17 et ENR2 19 hébergés par les bases de données distantes BD2 16 et BD3 18 respectivement en réponse à une requête générée par un utilisateur. Ces enregistrements intermédiaires permettent de générer un résultat constitué d'enregistrements ENRBD1 14 aux utilisateurs 1 et 2 à partir d'une mesure de similarité avec ces enregistrements intermédiaires ENR1 17, ENR2 19. Ces enregistrements ont pour fonction d'améliorer le ciblage des enregistrements ENRBD1. Ces enregistrements intermédiaires ENR1 17, ENR2 19 tels qu'enregistrés dans leur base respective ne sont pas présentés aux utilisateurs 1 et 2. Ces enregistrements ENR1 17, ENR2 19 ont pour seul rôle d'établir un lien de similarité avec les enregistrements ENRBD1 14.

Les enregistrements ENR1 17, ENR2 19 permettent de rechercher dans un premier temps des enregistrements proches au profil économique et technique de chaque utilisateur 1, 2, pour ensuite cibler par mesure de similarité les enregistrements ENRBD1 14 de la base de données BD1 13. Comme on l'appréciera plus précisément dans la suite de la description, la recherche intermédiaire préalable dans une des deux bases de données distante améliore significativement l'efficacité et la qualité des résultats délivrés par le moteur de recherche.

Par exemple, la base de données distante BD2 16 est une base de données de structure similaire à la base de données BD1 13 à la différence que le volume d'enregistrements de la base de données BD2 16 est supérieur au volume d'enregistrements de la base de données BD1 13. La similarité des structures des bases de données et des enregistrements est définie au sens qu'elles enregistrent le même type de données qui sont structurée de manière proche, c'est-à-dire qu'elles sont structurées par des champs d'information identiques. De manière générale, des champs d'information de deux bases de données distinctes sont identiques au sens que la donnée enregistrée dans un champs d'information pour un enregistrement de la première base de données est identique à la donnée enregistrée dans un champs d'information pour un autre enregistrement de la deuxième base de données. Donc pour deux bases de données similaires, par exemple dix champs d'information d'un enregistrement de la première base ont des données identiques à dix champs d'information d'un enregistrement de la deuxième base.

Cette similarité permet de générer un résultat de recherche ayant un degré de pertinence et de qualité élevé, ceci à travers le calcul d'un indice de similarité entre les enregistrements ENR1 17 de la base de données distante BD2 16 et les enregistrements ENRBD1 14 de la base de donnée locale du serveur du moteur de recherche. Dans un exemple, la deuxième base de données BD2 16 est de structure similaire à la base de données BD1 13 car elle comporte au moins 50% des champs d'information qui sont identiques aux champs d'information des enregistrements ENRBD1 formant la base de données BD1 13, de préférence au moins 60%, encore plus préférentiellement 70% et encore plus préférentiellement au moins 90%. Encore plus préférentiellement, la deuxième base de données BD2 16 comporte 100% des champs d'information qui sont identiques à aux champs d'information des enregistrements ENRBD1 formant la base de données BD1 13 . De plus, de préférence la base de données BD2 16 comporte au moins 100 fois ou 1000 fois plus d'enregistrements que la base de données BD1.

Dans un exemple, la base de données BD1 13 enregistre des enregistrements relatifs à des titres de brevet sélectionnés et proposés par des propriétaires inscrits à la plateforme de marché. Ces titres sont proposés à la vente de licence ou à la cession de titre par exemple. La base de données BD2 16 est une base de brevets opérée par un office de brevet ou un fournisseur de service de recherche de brevet. Les enregistrements ENR2 couvrent l'ensemble des titres de brevet dans le monde, ou un ensemble spécifique, par exemple sélectionné par territoire ou statut légal, par exemple en examen ou délivré. Les bases de données BD1 13 et BD2 16 comprennent toutes deux les champs d'information relatifs au nom des titulaires de brevets et un ou plusieurs champs de classification technique des brevets, par exemple le champ de classification internationale des brevets (CIB), ou le champ de classification coopérative de brevet (CPC). La classification internationale des brevets (CIB) est un système hiérarchique de symboles indépendants de la langue pour le classement des brevets et des modèles d'utilité selon les différents domaines technologiques auxquels ils appartiennent. Les codes CIB indiquent selon une arborescence très détaillée le domaine technique auquel se rapporte l'invention. La classification coopérative de brevet est système bilatéral qui a été développé conjointement par l'Office européen des brevets (OEB) et l'Office américain des brevets et des marques (USPTO). A chaque enregistrement, un ou plusieurs code(s) de classification peu(ven)t être attribué(s).

Un avantage des champs de classification de brevet CIB, CPC est de permettre d'établir une mesure de similarité entre les enregistrements ENR1 17 et les enregistrements ENRBD1. Comme nous le décrirons plus précisément dans la suite de la description, cette information est judicieusement utilisée par le moteur de recherche MR 10 pour mesurer une similarité avec des enregistrements ENRBD1 14 de la base de données BD1 13 afin de générer un résultat à l'utilisateur.

Dans un autre exemple, la base de données BD1 13 enregistre des enregistrements relatifs à des publications scientifiques sélectionnées et proposées par des propriétaires inscrits à la plateforme de marché. Par exemple, des accès à ces publications sont gratuits ou sont proposés à la vente. La base de données BD2 16 est une base de publications scientifiques opérée par un fournisseur de service. Les enregistrements ENR1 17 couvrent un catalogue de publications mondiales, ou un ensemble spécifique, par exemple sélectionné par territoire, date, domaines scientifiques.

Par ailleurs, la base de données distante BD3 18 est une base de données dont la fonction est de garantir l'obtention d'un résultat dans la base de données BD1 13, quelles que soient les données pré-enregistrées par chaque utilisateur 1 et 2 lors de leur inscription à la plateforme de marché en ligne, ou lors de la formulation d'une requête d'interrogation. Pour cela, la base de données distante BD3 18 est une base de données différente de la base de données BD2 16.

Par exemple, cette différence se caractérise tout d'abord en ce qu'elles sont adressables par une adresse http distincte, ou par une adresse ip distincte ou par un nom de domaine différent ou par un serveur différent. De plus, la base de données BD3 18 est une base de structure différente de la base de données BD2 16 car elle n'est pas destinée à enregistrer des informations relatives à des brevets.

Par exemple, cette différence se caractérise également en ce que la base de données BD3 18 comporte moins de 10% des champs d'information des enregistrements formant la première base de données BD1 13, ou moins de 5%. Dans une variante, elle comporte uniquement comme champs d'information commun celui concernant le nom d'entreprise.

La base de données BD3 18 a pour objet d'enregistrer des informations concernant l'activité économique d'une entreprise et à cet effet classifie des noms d'entreprise en fonction de domaines d'activité économique. Ainsi, grâce à la base de données BD3, le moteur de recherche MR 10 peut, à partir du nom d'une entreprise enregistré par chaque utilisateur, établir une association à une activité économique et technique. Comme nous le décrirons plus précisément dans la suite de la description, cette information relative à l'activité économique est judicieusement utilisée par le moteur de recherche MR 10 pour mesurer une similarité avec des enregistrements ENRBD1 14 de la base de données BD1 13 afin de générer un résultat à l'utilisateur.

A la différence de la base de données BD2 16, la structure de la base de données BD3 18 garantit que chaque utilisateur 1 et 2 est obligatoirement enregistré dans la base de données BD3 18 sans qu'un utilisateur soit nécessairement lui-même déposant d'un titre de propriété intellectuelle ou d'une publication scientifique. Cette différenciation de structure de base de données ouvre le champ de recherche d'enregistrements utilisés pour le calcul de l'indice de similarité. Cela permet d'augmenter la portée de recherche des enregistrements à une activité économique globale sans limiter la recherche au domaine technique d'un déposant précis.

Dans un premier exemple, la base de données BD3 18 classifie des entreprises, personnes physiques ou morales, association en fonction de codes d'identification individuel SIREN/SIRET qui sont des numéros attribués par l'INSEE (acronyme de l'Institut National des Statistiques et Etudes Economiques) dans un but d'identification auprès des administrations, code de classification d'une activité économique APE (code d'Activité Principale Exercée), ou NAF (Nomenclature d'Activité Française). La base de données BD3 18 peut être gérée par l'INSEE et accessible ou téléchargeable par l'intermédiaire du site Web de l'INSEE, ou par tout opérateur exploitant ces données.

Dans un deuxième exemple, la base de données BD3 18 est un moteur de recherche de sites Web et un enregistrement ENR2 19 est un lien indexé et/ou un champs textuel informatif de site Web. A partir du lien ou du champ textuel retourné par la base de données BD3 18, le moteur de recherche MR 10 est configuré pour établir une correspondance avec un code de classification CIB, CPC ou code APE.

### Le moteur de recherche

Plus précisément, le moteur de recherche MR 10 comprend une unité de traitement électronique comprenant une ou plusieurs mémoire(s) électronique(s), un ou plusieurs processeur(s) électronique(s), une ou plusieurs interface(s) et moyen(s) de communication électronique. Le moteur de recherche MR 10 est une entité logicielle mise en opération par un serveur pour exécuter plusieurs services informatiques décrits ci-dessous.

Le moteur de recherche MR 10 comprend un module d'interface 11 pour les communications avec la base de données BD1 13, la base de données BD2 16 et la base de données BD3 18. Ces moyens de communications permettent l'échange de données numériques en envoi et réception, notamment les données relatives à des enregistrements des bases de données BD1 13, BD2 16 et BD3 18 pour leur traitement par le moteur de recherche MR 10. Ils permettent également notamment l'échange de requêtes de recherche et de réponse à ces requêtes. Le module d'interface 11 de communication opère des fonctions d'interfaces logicielles mises en œuvre par un processeur électronique.

Plus précisément, le module d'interface 11 est apte à recevoir d'un utilisateur 1 et 2 via un terminal d'utilisateur, des données DON de profils utilisateurs (Nom entreprise, désignation produits, domaine technique, etc.) via une requête d'inscription ou une requête d'interrogation. Le moteur de recherche MR 10 est apte à délivrer à un utilisateur des résultats constitués d'enregistrements ENRBD1 issus de la base de données BD1 13.

Le module d'interface 11 est apte à transmettre une requête de recherche à destination de la base de données BD2 16 contenant une donnée d'interrogation DON pré-enregistrée par chaque utilisateur 1 et 2, notamment un nom d'entreprise et/ou des mots clefs. Le moteur de recherche MR 10 est apte à recevoir de la base de données BD2 16 des enregistrements ENR1 comprenant tout ou partie des informations respectives à chaque enregistrement, en particulier les enregistrements ENR1 17 comprenant la, ou les, donnée(s) d'interrogation. Comme liste non exhaustive on peut citer notamment les enregistrements ENR1 contenant la, ou les, donnée(s) d'interrogation, un numéro de dépôt, numéro de brevet, un numéro de publication, un code de classification CIB et/ou CPC.

Le module d'interface 11 est apte à transmettre une requête de recherche à destination de la base de données BD3 18 contenant une donnée d'interrogation DON pré-enregistrée par chaque utilisateur 1 et 2, notamment un nom d'entreprise et/ou des mots clefs. Le moteur de recherche MR 10 est apte à recevoir de la base de données BD3 18 des enregistrements ENR2 comprenant tout ou partie des informations respectives à chaque enregistrement, en particulier les enregistrements ENR2 19 comprenant la, ou les, donnée(s) d'interrogation. Comme liste non exhaustive on peut citer notamment les enregistrements ENR2 19 contenant la, ou les, donnée(s) d'interrogation, un code de classification APE, un code d'identification individuel SIREN/SIRET.

Dans une variante, le moteur de recherche MR 10 peut être configuré pour élaborer un traitement d'amélioration de la donnée d'interrogation DON et transmettre une requête de recherche améliorée vers les bases de données distantes BD2 16, BD3 18 élaborée à partir du résultat du traitement de la donnée d'interrogation. La requête de recherche ne contient donc pas nécessairement la donnée d'interrogation DON. Les bases de données distantes BD2, BD3 retournent une réponse à la requête de recherche. Par exemple, si la donnée d'interrogation est un nom d'entreprise ou un mot-clef, le moteur de recherche MR 10 élabore une requête de recherche améliorée sur la base d'un nom d'entreprise modifié, ou de tous les noms d'entreprise historiques associés, ou d'un ou de mots clefs équivalents dans une ou plusieurs langues de recherche. Les techniques de formulation d'une requête de recherche améliorée sont bien connues de l'homme du métier et ne seront pas décrites en détail.

### L'unité de calcul d'un indice de similarité

En outre, le moteur de recherche MR 10 comporte une unité de calcul d'un indice de similarité 12 entre d'une part des enregistrements de la base de données BD1 13, et d'autre part des enregistrements de la base de données BD2 16 et de la base de données BD3 18. L'unité de calcul d'un indice de similarité 12 opère une ou plusieurs fonctions de calcul de similarité mises en œuvre par un processeur électronique. Ces fonctions de calcul seront décrites en détail dans la suite de la description.

Dans une variante, le calcul de l'indice de similarité opéré entre un enregistrement de la base de données BD1 13 et un enregistrement issu de la base de données distante BD2 est identique au calcul opéré entre un enregistrement de la base de données BD1 13 et un enregistrement issu de la base de données distante BD3.

Dans une variante, dans laquelle l'unité de calcul de similarité 12 est apte à opérer divers modes de calcul, le calcul de l'indice de similarité opéré entre un enregistrement de la base de données BD1 13 et un enregistrement issu de la base de données distante BD2 16 est opéré selon un premier mode et le calcul opéré entre un enregistrement de la base de données BD1 13 et un enregistrement issu de la base de données distante BD3 18 est opéré selon un deuxième mode qui est différent du premier mode.

Dans une première variante de calcul de similarité, l'unité de calcul d'un indice de similarité 12 est configurée pour déterminer un code de classification commun entre chaque enregistrement de la base de données BD1 13 et des enregistrements de la base de données BD2 16 et/ou de la base de données BD3 18, puis pour calculer un indice de similarité dépendant dudit premier code de classification commun.

L'unité de calcul 12 est apte à détecter le code de classification si celui-ci est renseigné dans les champs d'information des enregistrements de la base de données BD1 13, de la base de données BD2 16 et de la base de données BD3 18.

En variante le code de classification est déterminé à partir d'un index d'association prenant en entrée un enregistrement de la base de données BD2 16 et/ou BD3 18, et délivrant une sortie une valeur de code de classification et, éventuellement, une variable ou un coefficient de répartition associé à ce code de classification. Par exemple, un index d'association est créé et géré par le moteur de recherche et permet d'associer un code de classification APE avec un ou plusieurs codes de classification CIB, CPC. Un tel index d'association permet d'opérer la recherche d'enregistrements servant à la mesure de similarité dans une base de données différente d'une base de brevet afin d'élargir le champ de recherche. Cet index d'association a notamment pour objectif de garantir la génération d'un résultat par le moteur de recherche MR 10. La construction et l'apprentissage de cet index d'association sera décrit plus en détail dans la suite de la description.

Dans un premier mode de calcul de la première variante, l'unité de calcul d'un indice de similarité 12 est configurée pour calculer des valeurs de coefficient d'apparition d'un code de classification pour chaque enregistrement ENRBD1 14, ENR1 17, ENR2 19 et pour calculer un produit formé de ces coefficients. L'unité de calcul d'un indice de similarité 12 est configurée pour réaliser des traitements des valeurs des coefficients, éventuellement des comparaisons par rapport à des valeurs de seuils, pour calculer un indice de similarité qui est attribué à chaque enregistrement ENRBD1 14 de manière à sélectionner et/ou ordonner les enregistrements ENRBD1 14 dans un fichier de résultat 15 prévu pour être présenté à un utilisateur. L'indice de similarité est une variable enregistrée en mémoire du moteur de recherche, par exemple soit entre 0 et 1, soit entre 0 et 100%, soit de manière générale dans une plage de valeur prédéterminée délimitée par un niveau minimum et un niveau maximum et dont la fonction est d'échelonner l'indice de similarité et permettre une comparaison avec d'autres indices de similarité.

Dans un deuxième mode de calcul de la première variante, l'unité de calcul d'un indice de similarité 12 est configurée pour détecter un code de classification commun entre chaque enregistrement ENRBD1 et les enregistrements ENR1 et ENR2 obtenus par le moteur de recherche 10 dans les bases de données distantes BD1 16 et BD2 18, puis pour calculer un indice soit sous la forme d'une variable de type booléen pouvant prendre un état haut ou bas, soit sous la forme d'un code numérique, indiquant s'il existe un code de classification commun ou non. Il s'agit d'un mode de calcul basique par rapport au premier mode de calcul qui permet de générer dans le fichier de résultat 15 uniquement les enregistrements ENRBD1 qui présentent un code de classification commun.

Dans une deuxième variante de calcul de similarité, l'unité de calcul d'un indice de similarité 12 est configurée pour exécuter des fonctions de similarité textuelle et sémantique de contenus issus des enregistrements ENRBD1, ENR1 17, ENR2 19 de manière à calculer un indice de similarité entre chaque enregistrement ENRBD1 et les enregistrements ENR1 17 et ENR2 19 obtenus par le moteur de recherche 10 dans les bases de données distantes BD1 16 et BD2 18. L'unité de calcul d'un indice de similarité 12 est configurée pour extraire un premier contenu textuel et/ou des mots-clefs issu de chaque enregistrement ENR1 17 et ENR2 19, pour extraire un deuxième contenu textuel issu de chaque enregistrement ENRBD1 14 de la base de données BD1 13, et pour calculer un indice de similarité entre le premier et le deuxième contenu textuel. Identiquement à la première variante de calcul l'indice de similarité est une variable enregistrée en mémoire du moteur de recherche, par exemple soit entre 0 et 1, soit entre 0 et 100%, soit de manière générale dans une plage de valeur prédéterminée délimitée par un niveau minimum et un niveau maximum et dont la fonction est d'échelonner l'indice de similarité et permettre une comparaison avec d'autres indices de similarité. Dans une autre variante, l'indice de similarité peut être soit sous la forme d'une variable de type booléen pouvant prendre un état haut ou bas, soit sous la forme d'un code numérique, indiquant l'existence de similarités textuelles et sémantiques. Le contenu textuel peut être une description, un résumé, un code de classification, un numéro d'identification.

Le calcul de similarité peut reposer sur des fonctions connues que l'homme du métier saura appliquer à partir de ses connaissances générales. De telles fonction ne seront pas décrites dans le détail dans la présente description et reposent sur des fonctions de similarité sémantique telles que les fonctions de hiérarchisation et de Clustering. On peut citer la technique de mesure de similarité décrite dans le document brevet US2018/0096254A1 par exemple, ou par Elsa Negre, dans l'article : « *Comparaison de textes : quelques approches* », 2013, hal-00874280.

Le moteur de recherche MR 10 comporte en outre des moyens de recherche d'un résultat comprenant des enregistrements ENRBD1 14 de la base de données BD1 13 élaboré en fonction d'un indice de similarité et un moyen de génération d'un résultat 15 comprenant le résultat. Selon une variante de recherche du résultat, tous les enregistrements ENRBD1 14 pour lesquels un indice de similarité a été calculé sont introduits dans le fichier de résultat. Selon une deuxième variante de recherche du résultat, on sélectionne soit les enregistrements ENRBD1 14 dont l'indice de similarité est supérieur à un seuil prédéterminé, soit les enregistrements ENRBD1 14 dont l'indice est égal à une valeur de similarité représentative de l'existence d'un code de classification commun ou de similarité textuelle, par exemple l'état haut de la variable booléenne.

Le moyen de génération du résultat 15 est configuré pour afficher tous les enregistrements ENRBD1 14 d'un résultat par indice de similarité par ordre décroissant par exemple, ou pour afficher seulement les enregistrements ENRBD1 14 d'un résultat dont l'indice respecte des critères de filtrage sélectionnés pour la génération du résultat (valeur d'indice de similarité supérieure à un seuil d'affichage ou quantité de résultats par page d'affichage par exemple). De manière générale, dans les deux cas, le moyen de génération du résultat 15 affiche les résultats par ordre décroissant de valeur d'indice de similarité, soit les résultats filtrés préalablement par un seuil d'indice de similarité, soit tous les résultats.

### L'apprentissage de l'index d'association entre un code APE et un code CIB et/ou CPC

Comme décrit précédemment le moteur de recherche MR 10 peut comprendre un index d'association entre un enregistrement d'une base de données distante et un code de classification utilisé pour la mesure de similarité. Cet index est obtenu dans une première phase d'apprentissage. Dans une variante, cet index établit une association entre un code APE d'une entreprise, personne physique ou personne morale, et un code de classification CIB et/ou CPC. Cet index d'association est élaboré durant une phase d'apprentissage exécutée par le moteur de recherche. Cette phase d'apprentissage comprend plusieurs étapes suivantes.

Tout d'abord, l'obtention des données d'une base de données source, par exemple base statistique de l'INSEE, à partir du site web de l'INSEE permettant le téléchargement de la base de données, associant le numéro d'identification individuel (SIREN) et un code APE. Chaque entreprise française possède un code APE délivré par l'INSEE lors de son inscription au Système National d'Identification et du Répertoire des Entreprises et de leurs Établissements (répertoire SIRENE), composé de cinq caractères : quatre chiffres et une lettre. Les quatre chiffres sont communs au code NAF ou NACE (Nomenclature statistique des Activités économiques dans la Communauté Européenne), la lettre en dernière position du code est propre à la France afin que le code soit adapté aux activités économiques spécifiques du pays.

La phase d'apprentissage comporte également l'obtention des données d'une autre base de données source comprenant un numéro d'identification individuel d'entreprise, personne morale et/ou personne physique (SIREN) associé à un code de classification CIB et/ou CPC. Par exemple, une base données accessible par le site web de l'INPI français (Institut National de la Propriété Industrielle) contient des brevets français déposés à l'INPI (voie nationale) et à l'OEB (Office Européen des Brevets). Cette liste répertorie notamment le numéro de brevet, les codes CIB, ainsi que le numéro SIREN du déposant.

Les codes CIB et CPC étant très spécifiques, lors de cette étape d'apprentissage, le moteur de recherche MR 10 tronque les codes de classification au niveau du groupe, juste avant le « / », pour obtenir une recommandation plus riche et moins restrictive que la classification originale.

Puis, le moteur de recherche MR 10 génère un index d'association à partir des données deux bases de données sources, issues de l'INPI et de l'INSEE permettant l'apprentissage d'une correspondance entre un code APE et un code de classification CIB et/ou CPC, de préférence tronqué.

Ensuite, lors de cette phase d'apprentissage, le moteur de recherche MR 10 calcule un coefficient d'apparition de chaque code CIB et/ou CPC pour chaque code APE. Ainsi, par exemple pour le code APE 24.4C, si le moteur de recherche MR 10 trouve les codes CIB A61K31/404, A61 K31/5377, A61 P5/00 et C07D209/94, le moteur de recherche MR 10 sélectionne les codes CIB tronqués : A61K31 qui apparaît 2 fois, A61 P5 et C07D209 une fois. Le moteur de recherche MR 10 crée un index d'association imbriqué avec en clé du premier index le code APE, en valeur un deuxième index avec en clé les codes CIB, et en valeur du deuxième dictionnaire des coefficients d'apparition Q1 : {"24.4C": {"A61K31" : **0.5,** "A61P7": **0.25,** "C07K14": **0.25**}}.

De préférence, le moteur de recherche MR 10 contient uniquement les codes CIB les plus pertinents, c'est-à-dire sur les codes CIB ayant une correspondance considérée comme intéressante au code APE. Cela permet d'améliorer la qualité du résultat généré par le moteur de recherche MR 10 à un utilisateur. Le seuil de pertinence choisi est la valeur maximale de la moyenne ou de la médiane des codes CIB d'un brevet.

Par exemple, pour le code APE 24.4C, {"24.4C": {"A61K31" : **0.5,** "A61 P7": **0.25,** "C07K14": **0.25**}}**.** Le calcul de seuil donne pour la moyenne (0.5 + 0.25 + 0.25) / 3 = 0.33, et pour la médiane : 0.25. Le seuil étant la valeur maximale de ces deux résultats, il est donc de 0.33, et le moteur de recherche MR 10 sélectionne uniquement le code CIB "A61K31 "à **0.5.**

En outre, préférentiellement, le moteur de recherche MR 10 normalise les coefficients d'apparition retenus de façon à ce que la somme des coefficients des codes CIB donne toujours 1. Dans cet exemple, pour le code APE 24.4C, le code CIB A61K31 serait associé avec une probabilité de 1.

### L'apprentissage de l'index d'association entre un code CIB et/ou CPC et un enregistrement ENRBD1 14 de la base de données BD1 13

On prend toujours le cas d'exemple où la base de données BD1 13 contient des brevets. Dans une deuxième phase d'apprentissage, le moteur de recherche MR 10 détermine la correspondance d'un code de classification CIB pour chaque enregistrements ENRBD1 14 de la base de données BD1 13. Cela consiste à sélectionner les brevets de la base de données BD1 13 contenant chaque code de classification obtenu lors de la première phase d'apprentissage.

Ensuite, le moteur de recherche MR 10 récupère la liste complète de tous les codes CIB associés à chacun des brevets trouvés dans la base de données BD1 13, et de préférence tronque ces codes comme précédemment au niveau du groupe (au niveau du "/"). Le moteur de recherche MR 10 élabore un autre index d'association prenant comme donnée d'entrée un numéro de brevet de la base de données BD1 13 et délivrant des codes de classification, à chaque code de classification un coefficient d'apparition Q2 ayant été calculé parmi les codes attribués. De préférence, identiquement à la phase précédente, le moteur de recherche retient uniquement le code CIB d'un brevet dont le coefficient d'apparition Q2 est supérieur à la moyenne des coefficients totaux.

Prenons un exemple, si le code CIB A61K31 renvoyait, entre autres, les brevets suivants de la base de données BD1 13 : EP2978047 et EP2832313, pour chacun de ces brevets le moteur de recherche MR 10 détermine la liste complète des autres codes CIB, de préférence tronqués.

Pour le brevet EP2978047, les codes CIB A61K31 et A61P7 par exemple sont sélectionnés comme étant ceux avec des coefficients d'apparitions supérieurs à la moyenne des coefficients Q2 de tous les codes CIB attribués à ce brevet. Tandis que pour le brevet EP2832313, le moteur de recherche MR 10 sélectionne les codes CIB A61K35 et A61 P7. Ce nouvel index d'association serait de la forme suivante :
([2978047] : ([A61K31 ; 0.5], [A61 P7 ; 0.4])
([2832313] : [A61K35 ; 0.5], [A61P7 ; 0.3])

Ensuite, dans une troisième phase, le moteur de recherche MR 10 calcule l'indice de similarité entre un code APE et un brevet de la base de données locales BD1 13 en fonction du produit du premier coefficient Q1 d'apparition du code CIB associé à chaque code APE et du deuxième coefficient Q2 d'apparition du même code associé à chaque brevet de la base de données BD1 13.

En continuant avec notre exemple, pour le code APE 24.4C, on a donc l'association pour le code CIB A61K31 avec un coefficient Q1 = 1, et pour ce code CIB, le coefficient Q2 est égal à 0.5 pour le brevet EP2978047. Le résultat de l'indice de similarité pour le code APE 24.4C et le brevet EP2978047 est donc de 0.5.

On remarque que le brevet EP2832313 remonté par le code CIB A61K31 ne contient pas ce code CIB dans sa liste de codes CIB pertinents, c'est-à-dire apparaissant assez pour avoir une occurrence supérieure à la moyenne des occurrences totales). Il ne sera donc pas recommandé pour ce code APE.

De manière générale, les brevets pour lesquels une multitude de codes CIB a été attribué auront des probabilités de correspondance plus faibles que ceux pour lesquels peu de codes CIB ont été attribués. On prend le postulat que si un brevet a une multitude de codes CIB, c'est alors qu'il est plus générique qu'un autre ayant moins de CIB, et sera donc moins pertinent à la recommandation lors de la génération du résultat.

La phase d'apprentissage par le moteur de recherche MR 10 peut être exécutée automatiquement à chaque mise à jour des bases de données sources, ou avec une fréquence programmée. Cela permet d'actualiser régulièrement les codes de classification et la valeur des coefficients d'apparition. On envisage que les valeurs des coefficients de similarité peuvent être corrigées et adaptées automatiquement par apprentissage des similarités aboutissant à un succès, c'est-à-dire un choix accepté par l'utilisateur.

Le moteur de recherche MR 10 est apte à élaborer d'autres types d'index d'association pour opérer le calcul de l'indice de similarité, par exemple un premier index associant un mot-clef et des codes de classification CIB et/ou CPC auxquels des coefficients d'apparition ont été attribués selon un mécanisme d'apprentissage et un deuxième index associant les codes de classification avec les enregistrements de la base de données BD1 13. Le moteur de recherche MR 10 peut donc comprendre un, ou plusieurs, index d'association prédéterminé(s) enregistré(s) en mémoire de l'unité de calcul d'un indice de similarité 12.

### Le procédé de recherche assistée mis en œuvre par l'invention

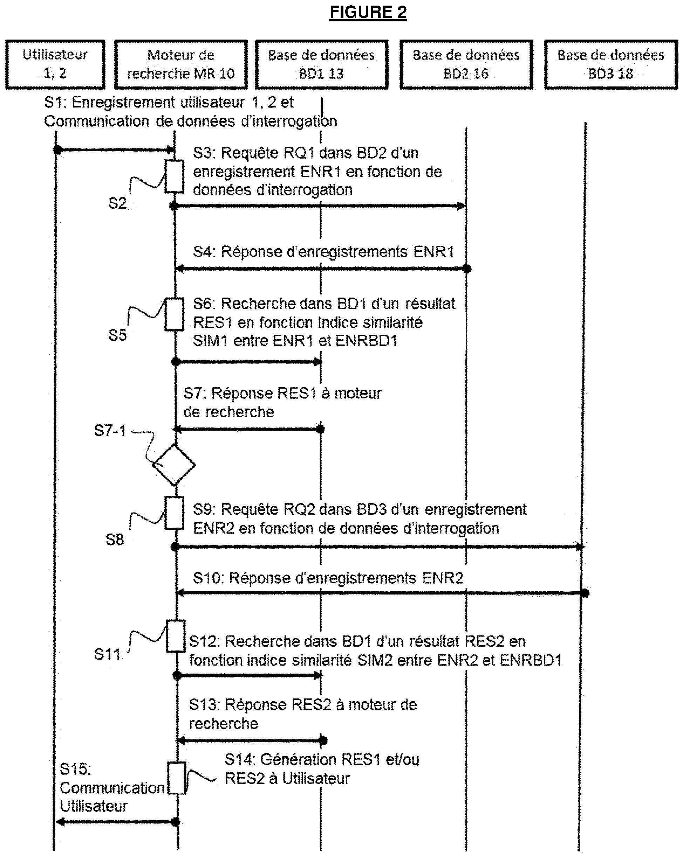

La figure 2 est un diagramme d'un mode de réalisation du procédé de recherche assistée représentant une séquence de recherche pour générer un résultat à un utilisateur. Le procédé de recherche est mis en œuvre par le système de recherche assistée 100 selon l'un quelconque des modes de réalisation décrit en figure 1.

En particulier, le système de recherche 100 comporte un processeur électronique muni d'un calculateur à circuits intégrés et de mémoires électroniques, le calculateur et les mémoires étant configurés pour exécuter le procédé de recherche assistée selon l'invention. Mais cela n'est pas obligatoire. En effet, le procédé de recherche peut être mis en œuvre sous par un unique ou plusieurs blocs fonctionnels dédiés à chaque unité du système de recherche 100. Par conséquent, le procédé de recherche assistée et le système associé, selon l'invention, peuvent être réalisés sous la forme de modules logiciels (ou informatiques (ou encore « software »)), ou bien de circuits électroniques (ou « hardware »), ou encore d'une combinaison de circuits électroniques et de modules logiciels. En particulier, le système de recherche 100 comprend un programme-ordinateur comprenant des instructions qui, lorsque le programme est exécuté par le système de recherche, conduisent celui-ci à mettre en œuvre l'un quelconque des modes de réalisation du procédé de recherche assistée.

A une première étape S1, un utilisateur qui débute un usage de la plateforme de marché en ligne réalise une phase d'inscription durant laquelle il préenregistre des informations de profil d'utilisateur. Cette phase d'inscription (« Sign in » en anglais) est opérée sur un terminal d'utilisation. Ces informations comprennent des données relatives à un nom d'entreprise, personne physique ou personne morale, ainsi que des mots-clefs relatifs aux produits et/ou service vendus par l'utilisateur, éventuellement un numéro d'identification de brevet déposé par le titulaire. Ces données pré-enregistrées constituent une ou plusieurs données d'interrogation DON. Par l'intermédiaire du terminal d'utilisation et du réseau de communication, le système de recherche 100 est configuré pour communiquer au moteur de recherche MR 10 la ou les données d'interrogation DON. Lorsque l'utilisateur actualise ses données de profil, le système de recherche 100 transmet au moteur de recherche MR 10 les nouvelles données.

Ensuite, à une deuxième étape S2, le moteur de recherche élabore une requête de recherche RQ1 élaborée à partir de la donnée d'interrogation DON. La requête de recherche est spécifiquement élaborée pour consulter la base de données distante BD2 16 par l'intermédiaire du réseau de communication internet.

Dans le cas où la base de données distante BD2 16 est une base de données brevet, la requête de recherche RQ1 comprend la donnée d'interrogation DON, où la donnée d'interrogation DON est un nom de déposant d'un titre de brevet, et éventuellement comprend également un mot-clef de recherche dans un champs descriptif textuel, revendication, description, résumé par exemple.

Dans le cas où la base de données distante BD2 16 est une base de données d'articles scientifiques, la requête de recherche RQ1 comprend l'adresse http de la base de données distante BD2 16, la donnée d'interrogation DON, où la donnée d'interrogation DON est un nom d'auteur d'article ou de déposant d'article, et éventuellement comprend également un mot-clef de recherche dans un champs descriptif textuel, description, résumé par exemple.

En variante, la requête de recherche RQ1 peut être élaborée à partir de la donnée d'interrogation DON par un traitement intermédiaire opéré par le moteur de recherche MR 10. La requête de recherche RQ1 ne contient pas nécessairement la donnée DON mais des données issues du traitement intermédiaire. Le moteur de recherche est configuré pour adapter spécifiquement la requête de recherche RQ1 à la base de données distante consultée, en particulier l'adresse http et le format de la requête.

A une troisième étape S3, le moteur de recherche MR 10 recherche un ou plusieurs enregistrements ENR1 17 dans la base de données distante BD2 16. Cette étape vise à rechercher un enregistrement ENR1 17 à partir des données pré-enregistrées, par exemple nom de déposant, nom de l'utilisateur, dans le but d'opérer ensuite une mesure de similarité entre cet enregistrement et les enregistrements de la base de données BD1 13. Un enregistrement ENR1 17 est donc un document numérique relatif à un brevet ou un document numérique relatif à un article scientifique.

A une quatrième étape S4, la base de données distante BD2 16 retourne une réponse contenant un, ou plusieurs, enregistrement(s), ENR1 17. Un enregistrement ENR1 17 est un brevet par exemple, contenant des données relatives aux codes de classification CIB et/ou CPC attribués par un office de brevet et des données textuelles relatives aux revendications, description, résumé. La réponse contient donc une liste d'un ou plusieurs brevets. Si l'utilisateur n'est pas un déposant brevet, la liste retournée est vide. Un enregistrement ENR1 17 peut être un article scientifique contenant des données textuelles de contenu de l'article, titre, description, résumé par exemple.

Selon une variante du procédé, un code de classification CIB et/ou CPC est judicieusement utilisé par le moteur de recherche MR 10 pour calculer un indice de similarité SIM1 dépendant du, ou des, code(s) de classification CIB et/ou CPC. Cette variante préférentielle sera décrite en détail dans l'étape suivante.

Selon une autre variante du procédé, les champs textuels sont utilisés par le moteur de recherche MR 10 pour calculer un indice de similarité élaboré à partir des données textuelles par une fonction d'analyse textuelle et sémantique.

A une cinquième étape S5, le moteur de recherche MR 10 calcule un indice de similarité SIM1 entre chaque enregistrement ENR1 17 de la base de données distante 16 et des enregistrements ENRBD1 14 de la base de données BD1 13. Selon une première variante de calcul, l'indice de similarité peut être est similaire au processus d'apprentissage décrit précédemment, à la différence qu'il est exécuté en temps réel et à partir d'une base de données source de brevets par exemple. Une deuxième variante de calcul peut consister à mesurer un indice de similarité de type textuel et/ou sémantique.

Selon cette première variante de calcul, le calcul de l'indice de similarité SIM1 consiste à déterminer un code de classification commun CIB et/ou CPC entre chaque enregistrement ENRBD1 14 de la première base de données ENRBD1 13 et chaque enregistrement ENR1 17 retourné par la réponse lors de l'étape S4, puis à calculer l'indice de similarité SIM1 dépendant du code de classification commun CIB et/ou CPC.

Plus précisément, prenons l'exemple où la base de données locale BD1 13 et la base de données distante BD2 16 sont des bases de brevets. La base BD1 13 contient les brevets qui sont proposés à la vente par la plateforme de marché et la base BD2 16 est une base de brevets contenant par exemple les brevets déposés sur un territoire, ou les brevets mondiaux.

Dans une première phase, pour chaque enregistrement de brevet ENR1 17 retourné par l'étape S4, le moteur de recherche MR 10 recherche les codes de classification qui lui ont été attribués par un office de brevet. Le moteur de recherche MR 10 récupère alors les codes de classification sous forme détaillée, ou préférentiellement sous forme tronquée. Le moteur de recherche MR 10 détermine au moins une part d'un code de classification CIB de chaque brevet et calcule un coefficient d'apparition Q1 du code de classification pour chaque numéro de brevet. Le coefficient d'apparition est une variable représentant la part du code parmi les codes de classification attribués.

Par exemple, si la réponse retourne le numéro de brevet WO2018162845A1, les codes de classification CIB retournés dans la réponse sont A61 K31/385 ; A61K31/4709 ; A61 K45/06 ; A61 P9/00. Sous forme tronquée, le code A61K31 apparaît deux fois, le code A61K45 une fois et le code A61P9 une fois.

Le moteur de recherche MR 10 détermine ensuite un index d'association prenant comme donnée d'entrée un numéro de brevet et délivrant des codes de classification, à chaque code de classification un coefficient d'apparition Q1 ayant été calculé parmi les codes attribués. Cet index peut être représenté sous la forme généralisée suivante :
[BREVET1] : ([code CIB11 ; %], [code CIB12 ; %], [code CIB13 ; %], [code CIB1n ; %]).
[BREVET2] : ([code CIB21 ; %], [code CIB22 ; %], [code CIB23 ; %], [code CIB2n ; %]).

Pour notre exemple, cet index ayant les codes de classification sous forme tronquée serait le suivant, avec les coefficients d'apparition Q1 représentés en caractère gras :
[WO2018162845A1] : ([A61K31 **;0,5**], [A61K45 **;0,25**], [A61 P9,**025**])

Ensuite, dans une deuxième phase, de manière similaire au processus d'apprentissage décrit précédemment, le moteur de recherche MR 10 détermine la correspondance d'un code de classification CIB pour chaque enregistrements ENRBD1 de la base de données BD1. Cela consiste à sélectionner les brevets de la base de données BD1 13 contenant chaque code de classification obtenu lors de la phase précédente.

De préférence, cette correspondance s'effectue uniquement sur les codes CIB les plus pertinents remontés à l'étape précédente, c'est-à-dire sur les codes CIB ayant une correspondance considérée comme intéressante au brevet. Cela permet d'améliorer la qualité du résultat généré par le moteur de recherche MR 10 à un utilisateur. Le seuil de pertinence choisi est la valeur maximale de la moyenne ou de la médiane des codes CIB d'un brevet.

Par exemple, pour le brevet WO2018162845A1, on avait l'index suivant :
[WO2018162845A1] : ([A61K31 **;0,5**], [A61K45 **;0,25**], [A61 P9,**025**]).

Le calcul de seuil donne pour la moyenne (0.5 + 0.25 + 0.25) /3 = 0.33, et pour la médiane : 0.25. Le seuil étant la valeur maximale de ces deux résultats, il est donc de 0.33, et le moteur de recherche MR 10 sélectionne donc uniquement le CIB "A61K31" à 0.5, dans ce cas-ci.

En outre, préférentiellement, le moteur de recherche MR 10 normalise les coefficients d'apparition retenus de façon à ce que la somme des coefficients des codes CIB donne toujours 1. Dans cet exemple, pour le brevet WO2018162845A1, le code CIB A61K31 serait associé avec une probabilité de 1.

Ensuite, le moteur de recherche MR 10 récupère la liste complète de tous les codes CIB associés à chacun des brevets trouvés dans la base de données BD1 13, et de préférence tronque ces codes comme précédemment au niveau du groupe (au niveau du "/"). Le moteur de recherche MR 10 élabore un autre index d'association prenant comme donnée d'entrée un numéro de brevet et délivrant des codes de classification, à chaque code de classification un coefficient d'apparition Q2 ayant été calculé parmi les codes attribués. De préférence, identiquement à la phase précédente, le moteur de recherche retient uniquement le code CIB d'un brevet dont le coefficient d'apparition Q2 est supérieur à la moyenne des coefficients totaux.

Prenons un exemple, si le code CIB A61K31 renvoyait, entre autres, les brevets suivants de la base de données BD1 13 : EP2978047 et EP2832313, pour chacun de ces brevets le moteur de recherche MR 10 détermine la liste complète des autres codes CIB, de préférence tronqués.

Pour le brevet EP2978047, les codes CIB A61K31 et A61P7 par exemple sont sélectionnés comme étant ceux avec des coefficients d'apparitions supérieurs à la moyenne des coefficients Q2 de tous les codes CIB attribués à ce brevet. Tandis que pour le brevet EP2832313, le moteur de recherche MR 10 sélectionne les codes CIB A61K35 et A61 P7. Ce nouvel index d'association serait de la forme suivante :
([2978047] : ([A61K31 ; 0.5], [A61 P7 ; 0.4])
([2832313] : [A61K35 ; 0.5], [A61P7 ; 0.3])

Ensuite, dans une troisième phase, le moteur de recherche MR 10 calcule l'indice de similarité SIM1 entre un brevet issu de la base de données distantes BD2 16 et un brevet de la base de données locales BD1 13 en fonction du produit du premier coefficient Q1 d'apparition du code CIB associé à chaque brevet de la base de données distante BD2 16 et du deuxième coefficient Q2 d'apparition du même code associé à chaque brevet de la base de données BD1 13.

En continuant avec notre exemple, pour l'enregistrement brevet WO2018162845A1, on a donc l'association pour le code CIB A61K31 avec un coefficient Q1 = 1, et pour ce code CIB, le coefficient Q2 est égal à 0.5 pour le brevet EP2978047. Le résultat de l'indice de similarité SIM1 pour le WO2018162845A1 et le brevet EP2978047 est donc de 0.5.

On remarque que le brevet EP2832313 remonté par le code CIB A61K31 ne contient pas ce CIB dans sa liste de codes CIB pertinents, c'est-à-dire apparaissant assez pour avoir une occurrence supérieure à la moyenne des occurrences totales). Il ne sera donc pas recommandé pour l'enregistrement brevet WO2018162845A1.

De manière générale, les brevets pour lesquels une multitude de codes CIB a été attribués auront des probabilités de correspondance plus faibles que ceux pour lesquels peu de codes CIB ont été attribués. On prend le postulat que si un brevet a une multitude de codes CIB, c'est alors qu'il est plus générique qu'un autre ayant moins de CIB, et sera donc moins pertinent à la recommandation lors de la génération du résultat.

Ensuite, à une étape S6, le moteur de recherche MR 10 recherche un premier résultat RES1 au moyen d'une requête à destination de la base de données BD1 13 les enregistrements ENRBD1 de la base de données BD1 13 élaboré en fonction de cet indice de similarité SIM1. La requête de recherche consiste à sélectionner tous les enregistrements ENRBD1 par ordre décroissant des valeurs d'indice de similarité SIM1, ou à sélectionner un nombre limité d'enregistrements, ce nombre peut être par exemple 10 enregistrements maximum, 20, 30 ou 50 maximum. Dans une autre variante, le moteur de recherche MR 10 sélectionne uniquement les enregistrements ENRBD1 ayant un indice de similarité SIM1 dont la valeur est supérieure à un seuil, par exemple 0.5, 0.6, 0.7, 0.8, ou 0.9.

Ensuite, à l'étape suivante S7, le moteur de recherche MR10 reçoit un résultat RES 1 constitué des enregistrements ENRBD1 17 selon leur indice de similarité SIM1 et destiné à être ensuite affiché à l'utilisateur.

Le calcul de l'index d'association peut être réalisé identiquement dans le cas d'articles scientifiques qui sont classifiés dans une base de données par des codes de classification et une nomenclature spécifique. Il suffit pour cela d'adapter la nomenclature de classification pour établir un code de classification commun entre des articles scientifiques d'une base distante et des articles scientifiques de la base de données locale contenant les articles à afficher à l'utilisateur.

En variante alternativement exploitant un code de classification associé aux enregistrements de chaque base de données, l'indice se similarité SIM1 peut être une variable de type booléen ou un code numérique, indiquant l'existence ou non d'un code de classification commun. Les étapes S2 à S7 se déroulent identiquement.

Par ailleurs, une deuxième variante de calcul peut consister à mesurer un indice de similarité de type textuel et/ou sémantique entre un enregistrement ENR1 17 de la base de données distante BD2 16 et chaque enregistrement ENRBD1 14 de la base de données locales BD1 13.

A cet effet, l'étape S5 de calcul de l'indice de similarité prévoit les étapes suivantes d'extraction d'un premier contenu textuel et/ou des mots-clefs issu de chaque enregistrement ENR1 17, brevets ou articles scientifiques par exemple, l'extraction d'un deuxième contenu textuel issu de chaque enregistrement ENRBD1 14 de la base de données BD1 13, brevets ou articles scientifiques par exemple, et le calcul de l'indice de similarité SIM1 entre le premier et le deuxième contenu textuel. Le calcul peut être réalisé selon les techniques connues de l'homme du métier qui saura les mettre œuvre par application de ses connaissances générales. On peut citer la technique de mesure de similarité décrite dans le document brevet US2018/0096254A1 par exemple, ou par Elsa Negre, dans l'article: « Comparaison de textes : quelques approches », 2013, hal-00874280.

Ensuite, le moteur de recherche exécute identiquement les étapes S6 et S7 en fonction de l'indice de similarité SIM1 obtenu par technique de similarité textuelle et/ou sémantique appliqué à l'étape S5.

Quelle que soit la technique de mesure de similarité utilisée parmi les variantes précédentes, à cette phase du procédé, le moteur de recherche dispose d'un premier résultat RES1 de pertinence élevée, car il repose sur des enregistrements se basant des enregistrements ENR1 déposés par l'utilisateur, et donc associés à sa propre activité technique et économique. La mesure de similarité entre les documents de la base de données BD1 et ces enregistrements garantissent un résultat de pertinence élevée.

Néanmoins, pour améliorer le système de recherche conformément à l'invention, le procédé de recherche assistée prévoit une phase complémentaire de recherche, constituée des étapes S8 à S13, incluant une recherche dans la base de données distante BD3 18 de manière à générer un deuxième résultat RES2 à l'utilisateur dans l'hypothèse que le premier résultat RES1 ne contiendrait aucun enregistrement.

Par exemple, dans un mode de réalisation du procédé, le premier résultat RES1 ne contient aucun enregistrement. Par exemple, si l'utilisateur n'est pas lui-même déposant de brevet ou articles scientifiques retrouvables dans la base de données distante BD2 16. Cette phase complémentaire vise à étendre la recherche à l'activité économique globale de l'utilisateur, en contrepartie il peut en résulter une diminution de la pertinence des résultats, pour garantir l'affichage d'un résultat. Pour cela, le moteur de recherche consulte la base de données BD3 18 qui a un objet et une structure différente de la base de données BD1 13. Préférentiellement, cette phase complémentaire est opérée quel que soit le résultat RES1, et le résultat RES1 et RES2 est affiché à l'utilisateur. En variante, cette phase complémentaire peut être opérée seulement si RES1 ne contient aucun enregistrement, cette condition est vérifiée par exemple lors d'un contrôle S7-1.

En particulier, pour la mise en œuvre de cette phase complémentaire, le moteur de recherche MR 10 a recours à l'index d'association élaboré pendant la phase d'apprentissage décrite précédemment et qui a été enregistré dans une mémoire du système de recherche en vue d'établir un lien et une mesure de similarité entre l'information recherchée dans la base de données BD3 18 chaque enregistrement ENRBD1 14 de la base de données BD1 13.

Ensuite, à une huitième étape S8, le moteur de recherche élabore une requête de recherche RQ2 élaborée à partir de la donnée d'interrogation DON. La requête de recherche est spécifiquement élaborée pour consulter la base de données distante BD3 18 par l'intermédiaire du réseau de communication internet 26.

Dans cet exemple préférentiel, la base de données distante BD3 18 est une base de données renseignant l'activité économique des entreprises, la requête de recherche RQ2 comprend la donnée d'interrogation DON, où la donnée d'interrogation DON est le nom de l'entreprise pré-enregistré par l'utilisateur, ou son numéro d'identification individuel, tel le code SIRET ou le SIREN. La base de données BD3 contient le code APE de l'entreprise associé au nom d'entreprise et le code d'identification individuel. La base de données est par exemple, la base de l'INSEE dans le cas du territoire français. Le choix de la base de données BD3 et la génération de la requête RQ2 est adaptée en fonction du territoire et de la base de données cible.

En variante, la requête de recherche RQ2 peut être élaborée à partir de la donnée d'interrogation DON par un traitement intermédiaire opéré par le moteur de recherche MR 10. La requête de recherche RQ2 ne contient pas nécessairement la donnée DON mais des données issues du traitement intermédiaire. Le moteur de recherche est configuré pour adapter spécifiquement la requête de recherche RQ2 à la base de données distante consultée, en particulier l'adresse http et le format de la requête. En particulier, la base de données BD3 présente une adresse http distincte de l'adresse de la base de données BD2.

Ensuite, à une neuvième étape S9, le moteur de recherche MR 10 recherche un enregistrement ENR2 19 dans la base de données distante BD3 18. Cette étape vise à rechercher un enregistrement ENR2 19, dans cet exemple préférentiel un enregistrement ENR2 étant un code APE, dans le but d'opérer ensuite une mesure de similarité entre cet enregistrement, le code APE, et les enregistrements ENRBD1 14 de la base de données BD1 13.

A une dixième étape S10, la base de données distante BD3 18 retourne une réponse contenant le code APE. Un code APE descriptif de l'activité économique de l'utilisateur. La fonction du code de classification APE dans le processus de recherche assistée est d'étendre la portée de la recherche à toute l'activité économique de l'utilisateur et de garantir au final un résultat, même si la pertinence du résultat est inférieure par rapport au résultat RES1.

Ensuite, à une onzième étape S11, le moteur de recherche MR 10 calcule un deuxième indice de similarité SIM2 entre le deuxième enregistrement ENR2 19, le code APE, et des enregistrements ENRBD1 14 de la première base de données BD1 13. Lors de cette étape S11, le moteur de recherche a recours à l'index d'association prédéterminé qui fait le lien entre un code APE et un enregistrement de la base de données BD1 13, et détermine notamment un indice de similarité SIM2 entre le code obtenu de la base de données distante BD3 18 et chaque enregistrement de la base de données BD1.

Conformément à la description déjà réalisée précédemment concernant d'une part l'apprentissage de l'index d'association entre un code APE et un code CIB, et d'autre part l'index d'association entre un code CIB et un enregistrement ENRBD1, pour un code APE reçu lors de l'étape S10, l'unité de calcul de similarité 12 est apte à calculer, à l'étape S11 un indice de similarité SIM2 entre un code APE et un brevet de la base de données locale BD1 13 en fonction du produit du premier coefficient Q1 d'apparition du code CIB associé à chaque code APE et du deuxième coefficient Q2 d'apparition du même code associé à chaque brevet de la base de données BD1 13.

Les coefficients d'apparition Q1 et Q2 ont été déterminés lors de la phase d'apprentissage et sont enregistrés en mémoire de l'unité de calcul de similarité 12 pour exécuter spécifiquement l'étape de calcul S11 de l'indice de similarité.

Le procédé de recherche selon l'invention prévoit d'autres variantes de calcul de l'indice de similarité SIM2. En particulier, à la différence du mode de réalisation préférentiel décrit précédent, aux étapes S9 et S10 on envisage que la base de données BD3 18 soit un moteur de recherche Web, apte à retourner un lien web et un résumé descriptif en réponse à une requête de recherche RQ2 contenant la donnée d'interrogation DON, par exemple le nom d'entreprise. Le contenu de réponse est par exemple, le premier lien web et le premier contenu descriptif de la page de recherche du moteur de recherche.

A l'étape S11, à partir du contenu de la réponse S10, l'unité de calcul 12 opère un traitement textuel et sémantique et détermine en temps réel un code de classification CIB associé. Ou bien, en variante, à partir du contenu de la réponse S10, l'unité de calcul 12 opère un traitement d'extraction de contenu textuel et sémantique et exécute une mesure de similarité textuelle et sémantique entre ce contenu retourné à l'étape S10 et chaque enregistrement de la base de données BD1 13. La technique de mesure est une des techniques connues de l'homme du métier est applicable grâce à ses connaissances générales. On peut citer la technique de mesure de similarité décrite dans le document brevet US2018/0096254A1 par exemple, ou par Elsa Negre, dans l'article : « Comparaison de textes : quelques approches », 2013, hal-00874280. Le calcul de similarité peut se limiter à la comparaison des champs textuels du résumé d'un brevet ou d'un article scientifique d'un enregistrement ENRBD1 14 avec le contenu textuel du lien WEB et du champs résumé associé à ce lien web retourné par le moteur de recherche. L'indice de similarité SIM2 peut être une variable comprise entre 0 et 1, ou un 0 et 100% par exemple.

Quelle que soit la technique de calcul de l'indice de similarité SIM2 utilisée à l'étape S11, l'unité de calcul 12 détermine un indice de similarité SIM2 pour chaque enregistrement ENRBD1 associé au code APE, ou contenu textuel retourné.

Ensuite, le moteur de recherche MR 10 exécute une douzième étape S12 de la recherche d'un résultat RES2 comprenant des enregistrements ENRBD1 14 de la base de données BD1 13 élaboré en fonction de l'indice de similarité SIM2 de chaque enregistrement. La requête de recherche consiste à sélectionner tous les enregistrements ENRBD1 par ordre décroissant des valeurs d'indice de similarité SIM2, ou à sélectionner un nombre limité d'enregistrements, ce nombre peut être par exemple 10 enregistrements maximum, 20, 30 ou 50 maximum. Dans une autre variante, le moteur de recherche MR 10 sélectionne uniquement les enregistrements ENRBD1 ayant un indice de similarité SIM2 dont la valeur est supérieure à un seuil, par exemple 0.5, 0.6, 0.7, 0.8, ou 0.9.

Ensuite, à une treizième l'étape S13 suivante, le moteur de recherche MR 10 reçoit un résultat RES2 constitué des enregistrements ENRBD1 14 selon leur indice de similarité SIM2 et destiné à être ensuite affiché à l'utilisateur.

Finalement, le moteur de recherche MR 10 exécute une quatorzième étape S14 de génération d'un résultat 15 comprenant les résultats RES1 et RES2, issus respectivement des étapes S2 à S7 et S8 à S13. Les deux résultats RES1 et RES2 sont inclus dans un même résultat où les enregistrements ENRBD1 sont affichés par ordre décroissant de valeur d'indice de similarité SIM1 et SIM2. Selon une variante, la valeur de l'indice de similarité est également affichée. Le résultat 15 est une liste de brevets ou articles scientifiques.

A une quinzième étape S15, le résultat 15 est communiqué à un utilisateur par l'intermédiaire du terminal d'utilisateur à travers le réseau de communication.

En variante du procédé, pour les étapes de calcul de l'indice de similarité S5 et S11, le calcul de la valeur du coefficient Q2 peut être exécuté soit en temps réel à la volée à chaque fois qu'un calcul de l'indice de similarité SIM1 et/ou SIM2 est réalisé, soit il est déterminé à partir d'un index prédéterminé issu d'un apprentissage.

Finalement, si le résultat proposé reçoit l'accord de l'utilisateur 1, 2, un contrat est proposé préférentiellement de manière automatique la plateforme en ligne.

## Revendications

1. Procédé de recherche assistée dans une première base de données BD1 (13) exécuté par un moteur de recherche (MR) configuré pour générer des résultats en réponse à une donnée d'interrogation (DON) comprenant les étapes successives suivantes :
- une recherche (S3) d'au moins un premier enregistrement ENR1 (17) dans une deuxième base de données BD2 (16) à partir d'une première requête (RQ1) élaborée à partir de ladite donnée d'interrogation (DON),
- un calcul (S5) d'un premier indice de similarité (SIM1) entre ledit au moins premier enregistrement ENR1 (17) et des enregistrements ENRBD1 (14) de la première base de données BD1 (13),
- une recherche (S6) d'au moins un premier résultat (RES1) comprenant des enregistrements ENRBD1 (14) de la première base de données BD1 (13) élaboré en fonction du premier indice de similarité (SIM1),
**caractérisé en ce qu'**il comporte en outre les étapes successives suivantes :
- une recherche (S9) d'au moins un deuxième enregistrement ENR2 (19) dans une troisième base de données BD3 (18) à partir d'une deuxième requête (RQ2) élaborée à partir de ladite donnée d'interrogation (DON),
- un calcul (S11) d'un deuxième indice de similarité (SIM2) entre ledit au moins deuxième enregistrement ENR2 (19) et des enregistrements ENRBD1 (14) de la première base de données BD1 (13),
- une recherche (S12) d'au moins un deuxième résultat (RES2) comprenant des enregistrements ENRBD1 (14) de la première base de données BD1 (13) élaboré en fonction du deuxième indice de similarité (SIM2),
- une génération (S14) d'un résultat (15) comprenant lesdits au moins premier et/ou deuxième résultats (RES1, RES2).

2. Procédé de recherche assistée selon la revendication 1 dans lequel chaque étape de recherche du premier et/ou deuxième résultat consiste à rechercher les enregistrements ENRBD1 (14) de la première base de données BD1 (13) dont le premier indice de similarité (SIM1) et/ou le deuxième indice de similarité (SIM2) sont supérieurs à un seuil.

3. Procédé de recherche assistée l'une quelconque des revendications 1 à 2, dans lequel le calcul du premier et/ou deuxième indice de similarité consiste à déterminer un premier code de classification commun (CIB) entre chacun des enregistrements ENRBD1 (14) de la première base de données BD1 (13) et chaque au moins un premier et/ou deuxième enregistrement (17 ; 19) puis à calculer un indice de similarité dépendant dudit premier code de classification commun (CIB).

4. Procédé de recherche assistée selon l'une quelconque des revendications 1 à 3, dans lequel le calcul du au moins un premier et/ou deuxième indice de similarité consiste à :
- Déterminer au moins une part d'un deuxième code de classification (CIB) de chaque au moins premier enregistrement ENR1 (17) et/ou de chaque au moins deuxième enregistrement ENR2 (19),
- Sélectionner les enregistrements de la première base de données BD1 (13) contenant ledit deuxième code (CIB),
- Calculer l'indice de similarité en fonction du produit d'un premier coefficient (Q1) d'apparition dudit deuxième code (CIB) associé à chaque au moins un premier enregistrement ENR1 (17) et/ou à chaque au moins un deuxième enregistrement ENR2 (19), et d'un deuxième coefficient (Q2) d'apparition dudit code associé à chaque enregistrement des enregistrements de la première base de données BD1 (13).

5. Procédé de recherche assistée selon la revendication 4, dans lequel le premier coefficient (Q1) de chaque au moins un deuxième enregistrement ENR2 (19) est déterminé à partir d'un premier index d'association prenant en entrée un deuxième enregistrement ENR2 (19) de la troisième base de données BD3 (18) et délivrant en sortie le coefficient prédéterminé (Q1) associé au deuxième code de classification.

6. Procédé de recherche assistée selon l'une quelconque des revendications 1 à 5, dans lequel, pour exécuter le calcul du deuxième indice de similarité (SIM2), le procédé comporte en outre une phase d'apprentissage comprenant les étapes suivantes :
- L'obtention des données d'une quatrième base de données comprenant la donnée d'interrogation (DON) associée à un numéro d'identification individuel et un troisième code de classification,
- L'obtention des données d'une cinquième base de données associant le numéro d'identification individuel et l'au moins un deuxième enregistrement ENR2 (19),
- La génération d'un deuxième index d'association à partir desdites données de la quatrième et cinquième base de données permettant l'apprentissage d'une correspondance entre l'au moins un deuxième enregistrement ENR2 (19) et le troisième code de classification.

7. Procédé de recherche assistée selon la revendication 6, dans lequel la donnée d'interrogation (DON) est une donnée d'identification de l'utilisateur, et l'au moins un deuxième enregistrement ENR2 (19) de la troisième base de données BD3 (18) contient des données de classification (APE) de l'activité économique de l'utilisateur.

8. Procédé de recherche assistée l'une quelconque des revendications 1 à 3, dans lequel le calcul du premier et/ou deuxième indice de similarité comporte les étapes suivantes :
- L'extraction d'un premier contenu textuel et/ou des mots-clefs issus de chaque au moins premier et/ou deuxième enregistrement ENR1, ENR2 (17, 19),
- L'extraction d'un deuxième contenu textuel issu de chacun des enregistrements ENRBD1 (14) de la première base de données BD1 (13),
- Calculer le premier et/ou le deuxième indice de similarité (SIM1, SIM2) entre le premier et le deuxième contenu textuel.

9. Procédé de recherche assistée selon l'une quelconque des revendications 1 à 8, dans lequel la deuxième base de données BD2 (16) et la troisième base de données BD3 (18) sont des bases de données distinctes accessibles par le réseau Web, chaque base de données étant accessible par une adresse http distincte.

10. Procédé de recherche assistée selon l'une quelconque des revendications 1 à 9 dans lequel la deuxième base de données BD2 (16) comporte au moins 50% des champs d'information qui sont identiques à des champs d'information des enregistrements formant la première base de données BD1 (13).

11. Procédé de recherche assistée selon l'une quelconque des revendications 1 à 10 dans lequel la deuxième base de données BD2 (16) comporte au moins 100 fois ou 1000 fois plus d'enregistrements que la première base de données BD1 (13).

12. Procédé de recherche assistée selon l'une quelconque des revendications 1 à 11 dans lequel la troisième base de données BD3 (18) comporte moins de 10% des champs d'information des enregistrements formant la première base de données BD1 (13).

13. Procédé de recherche assistée selon l'une quelconque des revendications 1 à 12 dans lequel l'au moins un premier résultat (RES1) ne contient aucun des enregistrements ENRBD1 (14) de la première base de données BD1 (13).

14. Système de recherche assistée (100) d'enregistrements numériques comprenant une ou plusieurs mémoires électroniques, un ou plusieurs processeurs électroniques, une ou plusieurs interfaces et moyens de communication électronique distante, des première, deuxième et troisième bases de données BD1, BD2, BD3 (13, 16, 18), des moyens de génération (11) de requêtes de recherche dans lesdites bases de données BD1, BD2, BD3 (13, 16, 18), un moyen de calcul (12) d'un indice de similarité (SIM1, SIM2), des moyens de recherche d'enregistrements dans la première base de données BD1 (13) en fonction dudit indice de similarité (SIM1, SIM2), et un moteur de recherche (MR) configuré spécifiquement pour exécuter le procédé de recherche assistée selon l'une quelconque des revendications précédentes.

15. Produit programme d'ordinateur comprenant des instructions qui, lorsque le programme est exécuté par le système de recherche assistée (100), conduisent celui-ci à mettre en œuvre le procédé de recherche assistée selon l'une quelconque des revendications 1 à 13.
